# EUROPEAN PATENT SPECIFICATION

(11) **EP 0 501 988 B1**
(45) Date of publication and mention of the grant of the patent: **06.03.1996**
(21) Application number: 90916506.0
(22) Date of filing: 13.11.1990
(51) Int. Cl.: H04N 5/262, H04N 7/24, H04N 9/79, H04N 9/80

(54) **STORAGE OF DIGITAL IMAGE COMPOSITION CONTROL SIGNAL**
SPEICHERUNG DES KONTROLLSIGNALS FÜR DIGITALE BILDZUSAMMENSETZUNG
STOCKAGE D'UN SIGNAL DE COMMANDE DE COMPOSITION D'IMAGE NUMERIQUE

(30) Priority: 22.11.1989 GB 8926377
(43) Date of publication of application: 09.09.1992
(73) Proprietor: RANK CINTEL LIMITED, Ware Hertfordshire SG12 OAE (GB)
(72) Inventor: STANSFIELD, Peter, William Clifton, Hertfordshire AL10 0SH (GB)
(74) Representative: Robson, Aidan John
(86) International application number: GB9001741
(87) International publication number: WO9107845

(56) References cited:
- GB-A- 2 117 208
- US-A- 4 774 507
- US-A- 4 855 831

## Description

The invention relates to digital video image composition systems and in particular to those which use separate "control" planes to control the composition of two or more video images.

From GB-A-2117208 a method for reproducing a composite picture from a scanned original picture and a scanned character document is known. The picture and character signals are converted into a digital data format suitable for controlling a printer. The data format includes a one bit per pixel keying signal by which the picture signals are selected to be output only when the character signals do not exist in the processing circuit.

A special effect video system using a one bit per pixel keying signal is know from US-A-4774507. The keying signal is used to designate an area of an input video signal where a special effect is to be applied. This is achieved by sending the video signal to the special effects unit only when the key signal has logical level "1".

One digital video image composition system is described in British Patent GB-A-2113950. In this a multi-bit per pixel control plane is used to control the composition of two images. The value in the control plane for a pixel determines the proportions of the corresponding pixels in the two images which will be used for the final composed image. Thus the proportions of the two images can be varied by varying the values in the control plane. This variation enables the boundary between two images to be soft-edged or anti-aliased by varying the control plane values across a number of pixels crossing the boundary.

In video production systems the control plane values will be used to control video mixers (or keyers).

The main problem with the use of these control planes is the fact that they require additional storage space. If, for example, an 8-bit per pixel control plane is used a considerable increase in memory is required. Also, when the video signals are supplied with their control planes for real-time image composition, it is necessary to transmit at a higher bit-rate.

One object of the present invention is to eliminate or at least reduce the need for additional storage space and higher bit-rate transmissions in compositing images.

The invention is defined in the appended claims to which reference should now be made.

The invention will now be described in more detail by way of example with reference to the drawings in which:
Figure 1 shows a prior art storage arrangement for a YUV video image and a 3 bit control plane;
Figure 2 shows a circuit for decoding a video signal supplied in accordance with a first embodiment of the invention;
Figure 3 shows the storage structure of a YUV video image and a control plane in a second embodiment of invention;
Figure 4 shows the transmission sequence of a YUV signal and a control plane in 4:2:2 format in the second embodiment of the invention; and
Figure 5 shows a circuit for encoding a video signal in accordance with the first embodiment at the invention.

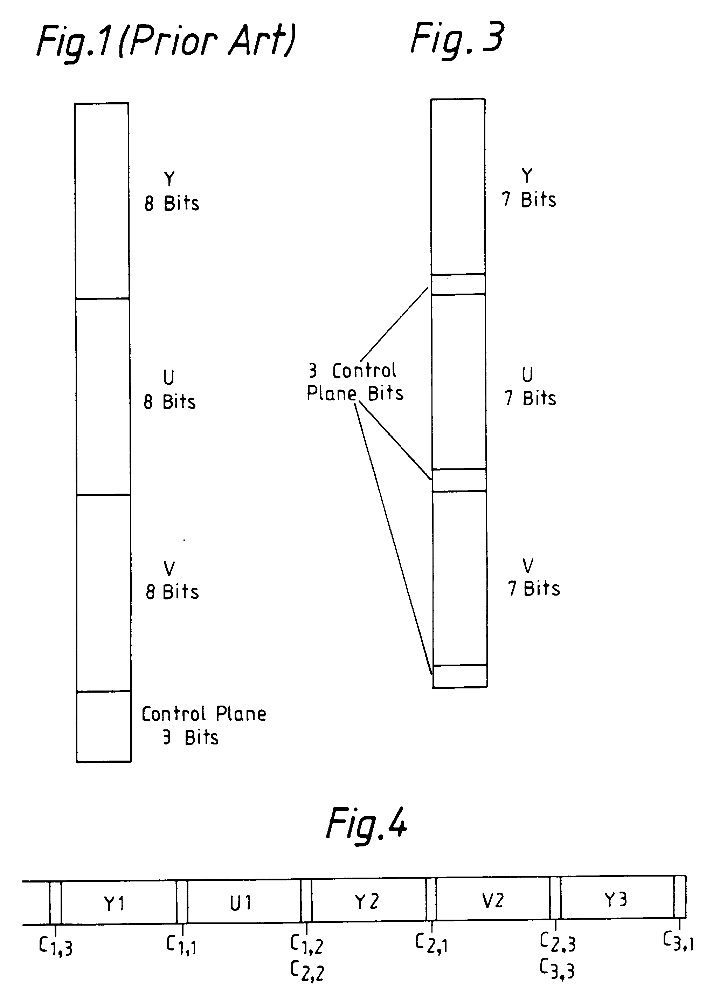

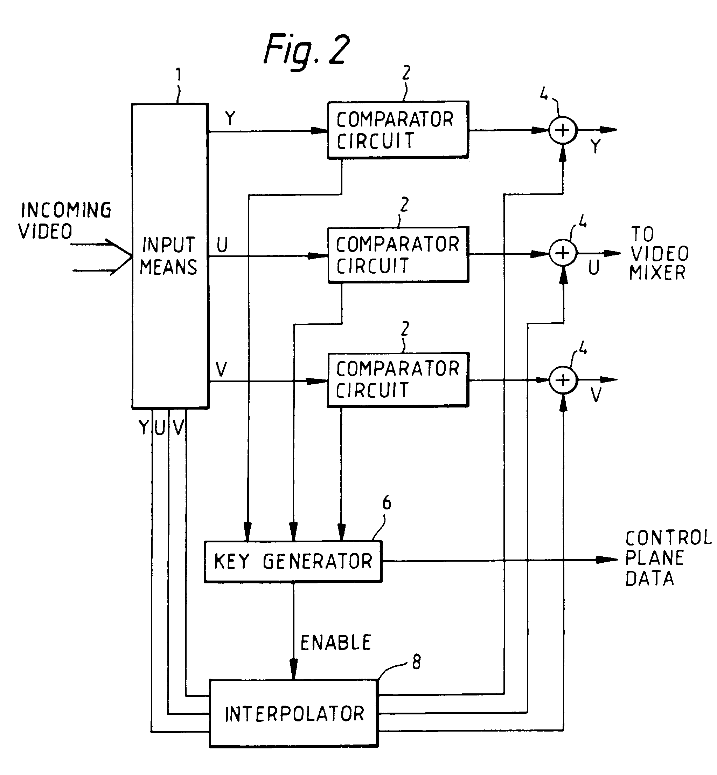

A YUV digital video signal is conventially stored with n bits for each of the luminence (Y) and chrominance (U and V) components. Such a signal is shown in Figure 1 with 8-bits being used for the storage of each of the Y, U, and V components. This data is used to represent the video signal for one pixel.

In addition to the Y, U, and V components for each pixel the video signal considered here has a 3 bit control plane associated with it. This is shown in Figure 1 as an additional 3 bits of data storage per pixel.

Each of the Y, U, and V components of the signal has a binary level in the range 00000000 to 11111111 equivalent to decimal 0 to 255 giving a total of 256 levels.

A first embodiment of the invention includes the 3 control plane bits within the 24 bit YUV data word by assigning at least one of the levels of the Y, U, and V components to represent a control plane bit. For example, the all 1's state of each 8 bit component could be used to represent a control plane bit.

Three control plane bits, one in each component, will give a total of 8 control plane values. However, the presence of each control bit in a word comprising Y, U, and V values for a pixel will lead to at least one and possibly all three video components for that pixel being lost. Thus, when the video signal is keyed into a background video signal in accordance with the control plane values, the video components in some of the pixels will have to be interpolated from neighbouring pixels.

In order to minimise the loss of resolution caused by the loss of the video components in pixels which have control plane values, the control plane values are only transmitted at the boundaries of an object to be keyed into the background. The area within the boundary can then be filled in without any loss of resolution within the boundary.

The boundary transition from background to foreground can take place over a single pixel or a number of pixels. A mixer receiving the keying signals can be arranged to fill in the area inside the boundary with full opacity for the keyed in foreground or with transparency.

A circuit for extracting control plane data from an incoming video signal is shown in Figure 2. This circuit receives the Y, U, and V components of the incoming video signal at an input means 1 and three comparators 2 determine whether any of the three components have the all 1's state denoting a control plane bit.

If there are no control plane bits the the Y, U, and V components pass directly to respective outputs via three adders 4.

If any one of the three input components is in the all 1's state then a signal will be generated at a second output of the respective comparator 2. The three second outputs of the comparators are coupled to three inputs of a key generation circuit 6. This outputs a 3 bit control plane word in accordance with the outputs of the comparators and this is used to control the mixer.

A further output of the key generation circuit 6 is coupled to enable input of an interpolation circuit 8 which also receives the incoming Y, U, and V words. When a control plane bit is present the key generation circuit 6 enables the interpolation circuit 8 to identify which components need to be interpolated from neighbouring pixels and derives these in a well known manner using an arrangement of delays, adders, and multipliers.

When none of the three components are in the all 1's state then the control plane value will be 000 and there will be no keying in of the input video signal into the background.

The control plane bits can be inserted into the video signal by simply using the three control plane bits to switch each of the Y, U, and V components between the source of video signals and an all 1's signal in accordance with the value of the respective control bit.

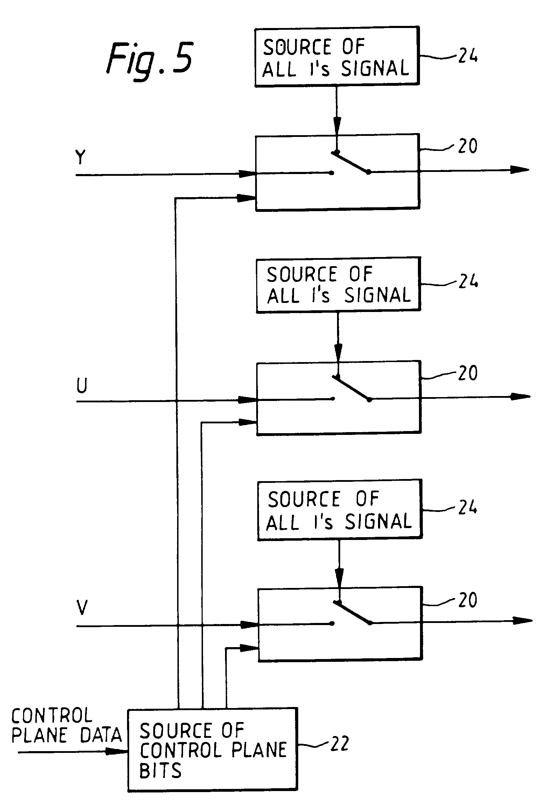

A circuit for inserting the control plane bits into the video data is shown in Figure 5. Each of the Y, U, and V data words is connected to an input of a respective switch 20. Each switch is controlled by a control plane bit supplied by a source of control plane bits 22 to switch its output between the incoming component of the video signal and a source of an all 1's signal 24. The source 24 could typically be a shift register or a series of switches connected to logic 1.

When the control plane bit controlling a switch is a logic O then the respective component of the video signal will be switched through to the output. When the control plane bit is a logic 1 the all 1's signal will be switched through to the output of the switch 20. Thus each of the components of a video signal can be replaced by an all 1's state representing a control bit. The resultant output video signal can then be stored for future use if desired or supplied direct to a decoding circuit of the type shown in Figure 2.

When the video signal is supplied in 4:2:2 format in accordance with CCIR recommendation 601, the U and V components are shared by adjacent pixels. For this reason, the MSB of the control plane preferably replaces the Y component for a pixel. Since the U and V values for adjacent pixels are shared, the two LSB's of the control plane word are also shared. When respective control plane bits are the same in adjacent pixels then there is no problem in this. For example if both the bits represented by the U component are O then the U component is left unchanged and when they are both 1 the U component is switched to the all 1's state. Where the bits are different, a random selection takes place and either a logical 0 or 1 is selected and the respective component switched to either the incoming video component or the all 1's state.

Figure 3 shows a second embodiment of how a 24 bit YUV video signal and a 3 bit control plane signal for a pixel can be stored in a total of 24 bits of memory. This is done by using only 7 bits for each of the Y,U and V values and using the 3 spare bits thus created for the storage of the control plane.

Firstly the luminance word is considered and if the least significance bit (which represents the darkest level of luminance) is used the second less significance bit is incremented. Thus this is equivalent to a rounding up operation. The most significant bit of the control plane is then inserted into the spare bit created by the rounding up operation. This could similarly be achieved by rounding down or simply discarding the LSB.

The same operation is performed on the two chrominance words and the second LSB and the LSB are inserted into the two spare bits thus created.

The operation described above can be implemented in software or alternatively a dedicated hardware circuit could be used. This circuit would include inputs for the video signal and the control plane and circuitry to discard the appropriate LSB's and replace them with control plane bits. An output to a frame buffer would enable the resultant signal to be stored.

The loss of the LSB in each of the Y,U and V components does not lead to any perceptable degregation of the image in normal viewing circumstances. It also enables existing video data storage units e.g. frame stores to be used for the storage of the data without the need for a separate store for the control plane.

The standard transmission format specified in CCIR recommendation 601 for YUV video data is the 4:2:2 structure. This involves transmitting alternate luminence and chrominance values. The order is shown in Figure 4. In this it will be seen that the order of transmission is;
Y1, U1, Y2, V2, Y3, U3 .............

When this transmission sequence is received adjacent pixels have to share the chrominance (U and V) values. For example, in a line of video data pixels 1 and 2 would share the same U value which would be derived from an average between the original U values for those two pixels, pixels 2 and 3 would share the same V values which would be similarly derived, pixels 3 and 4 would share the same U values etc.

A three bit control plane could be incorporated in such a signal either after the averaging process, or before the averaging process. In the latter case the averaging would then only take place on seven bits of data.

Clearly it is necessary also to average the control plane bits stored with the U and V components. In the case where both bits are the same in adjacent pixels there is no problem in this. Where they are different then a random selection of either logical 1 or logical 0 could be made for that bit. The MSB is of course stored with the Y component and thus is different for each pixel.

The storage of the control plane with the sequence of Y, U, Y, V, Y, U transmission is also shown in Figure 4. The control bits are designated C1,1 etc where the first numeral represents the pixel and the second numeral the bit, one representing the RSB and three the LSB. It can thus be seen that the U and V bits used for each pixel will also contain the respective control plane bits.

A video signal received in the sequence of Figure 4 is reconstructed into YUV components and control plane for each pixel and if required can be converted to 8 bit words for each component by randomly assigning a bit to the LSB. The signal can then be keyed into a second video signal preferably also of 8 bit format using the control plane value stored in the three control bits to control the proportions in which the two signals are combined.

The invention will also operate with control planes which have more than three data bits. In such situations at least one data bit of each data word will comprise control plane data.

Any video signal embodying the invention can be separated into video data and control plane data either in software or in dedicated hardware. The hardware solution would require means to receive the video signal and means to separate the control plane data from it before supplying the video data to a video mixer to be combined with a second video signal under the control of the control plane data. Such a system is described above with reference to Figure 2. In other respects the composition system can be based on that described in GB 2113950 which is mentioned above.

The invention has been described here with reference to a YUV or YIQ signal but is clearly not limited to this and could equally well be used with an RGB signal.

## Claims

1. A method of combining a digital video signal with a control plane signal, the method comprising the steps of receiving a digital video signal and also receiving a corresponding control plane signal, characterised in that the video signal comprises three data words for each pixel and the control plane signal comprises three data bits for each pixel, and by the steps of associating each of the three data words with a respective control plane data bit, and replacing a data word in the video signal with a predetermined combination of bits when its respective control plane data bit has a 1st logical level and leaving the data word unchanged when its respective control plane data bit has a 2nd logical level.

2. A system for combining a digital video signal with a control plane signal comprising means for receiving a digital video signal and, means (22) for receiving a control plane signal, characterised in that the video signal comprises three data words for each pixel and the control plane signal comprises three data bits for each pixel, and by means for associating each of the three data words with a respective control plane data bit, and means (20) for replacing a data word in the video signal with a predetermined combination of bits when its respective control plane data bit has a 1st logical level and leaving the data word unchanged when its respective control plane data bit has a 2nd logical level.

3. A digital video image composition system comprising means (1) for receiving a first digital video signal having a plurality of data words for each pixel, means for receiving a second digital video signal, and means for combining the first and second digital video signals for each pixel in variable proportions dependent upon the value of a control plane data bit or bits corresponding to that pixel, characterised in that at least one combination of bits in a data word for a pixel in the first video signal indicates the presence of a control plane data bit, by means (6) for generating a control plane data bit for that pixel in response to said combination of bits in the data word, and by means (8) for interpolating a replacement video data word for that pixel from corresponding data words in adjacent pixels for use in the combining means.

4. A digital video image composition system according to claim 3 in which the first video signal comprises three data words per pixel each of which has at least one combination of bits indicating the presence of a control plane data bit.

5. A method of combining a digital video signal with a control plane signal, the method comprising the steps of receiving a digital video signal and also receiving a corresponding control plane signal, characterised in that the video signal has three data words for each pixel, and the control plane signal has at least three data bits for each pixel and by discarding at least the least significant bit of each data word, and replacing each discarded bit with a respective one of the control plane bits for that pixel.

6. A method of combining a digital video signal with a control plane signal according to claim 5 characterised in that the video signal comprises a YUV signal in 4:2:2 format.

7. A system for combining a digital video signal with a control plane signal, comprising means for receiving a digital video signal and means for receiving a control plane signal, characterised in that the video signal has three data words for each pixel and the control plane signal has at least three data bits for each pixel, and by means for discarding at least the least significant bit of each data word for a pixel and replacing it with a respective one of the control plane bits for that pixel.

8. A system for combining a digital video signal with a control plane signal according to claim 7 characterised in that the video signal comprises a YUV signal in 4:2:2 format.

9. A digital video image composition system comprising means for receiving a first digital video signal means for receiving a second digital video signal, means for combining the first and second video signals for each pixel in variable proportions dependent upon the value of a control plane signal corresponding to that pixel characterised in that the first video signal comprises three data words per pixel and at least one of the data bits of each data word comprises control plane data, and by means for separating the control plane data bits for each pixel from the first video signal.

10. A digital video image composition system according to claim 9 characterised in that the least significant bit of each data word in the first video signal comprises a control plane data bit.

11. A digital video image composition system according to claim 9 characterised in that the first video signal comprises a YUV signal received in 4:2:2 format.

## Patentansprüche

1. Verfahren zum Kombinieren eines digitalen Videosignals mit einem Kontrollebenensignal, wobei das Verfahren die Schritte Empfang eines digitalen Videosignals und ebenso Empfang eines entsprechenden Kontrollebenensignals beinhaltet, **dadurch gekennzeichnet,** daß das Videosignal drei Datenworte für jedes Pixel beinhaltet und das Kontrollebenensignal drei Datenbits für jedes Pixel beinhaltet, und durch die Verfahrensschritte Zuordnung jedes der drei Datenworte zu einem entsprechenden Kontrollebenen-Datenbit und Ersetzen eines Datenworts in dem Videosignal durch eine vorherbestimmte Kombination von Bits, wenn sein entsprechendes Kontrollebenen-Datenbit einen ersten logischen Signalpegel hat und Unverändertlassen des Datenwortes wenn sein entsprechendes Kontrollebenen-Datenbit einen zweiten logischen Signalpegel hat.

2. System zum Kombinieren eines digitalen Videosignals mit einem Kontrollebenensignal umfassend eine Vorrichtung zum Empfang eines digitalen Videosignals und eine Vorrichtung (22) zum Empfang eines Kontrollebenensignals, **dadurch gekennzeichnet,** daß das Videosignal drei Datenworte für jedes Pixel beinhaltet und das Kontrollebenen-Signal drei Datenworte für jedes Pixel beinhaltet und durch eine Vorrichtung zum Zuordnen jedes der drei Datenworte zu einem entsprechenden Kontrollebenen-Datenbit, und eine Vorrichtung (20) zum Ersetzen eines Datenwortes in dem Videosignal durch eine vorherbestimmte Kombination von Bits, wenn sein entsprechendes Kontrollebenen-Datenbit einen ersten logischen Signalpegel hat und Unverändertlassen des Datenwortes, wenn sein entsprechendes Kontrollebenen-Datenbit einen zweiten logischen Signalpegel hat.

3. System für digitale Videobildzusammensetzung umfassend eine Vorrichtung (1) zum Empfang eines ersten digitalen Videosignals mit einer Vielzahl von Datenworten für jedes Pixel, eine Vorrichtung zum Empfang eines zweiten digitalen Videosignals, und eine Vorrichtung zum Kombinieren des ersten und des zweiten digitalen Videosignals für jedes Pixel in variablen Proportionen abhängig von dem Wert von mindestens einem dem Pixel entsprechenden Kontrollebenen-Datenbit, **dadurch gekennzeichnet,** daß mindestens eine Kombination von Bits in einem Datenwort für ein Pixel in dem ersten Videosignal das Vorhandensein eines Kontrollebenen-Datenbits anzeigt, weiter gekennzeichnet durch eine Vorrichtung (6) zum Erzeugen eines Kontrollebenen-Datenbits für dieses Pixel in Erwiderung auf die Kombination von Bits in dem Datenwort, und durch eine Vorrichtung (8) zum Interpolieren eines Austausch-Videodatenwortes für dieses Pixel aus entsprechenden Datenworten in benachbarten Pixels zur Verwendung in der Vorrichtung zum Kombinieren.

4. System nach Anspruch 3, in welchem das erste Videosignal drei Datenworte pro Pixel beinhaltet, von denen jedes mindestens eine Kombination von Bits hat, die das Vorhandensein eines Kontrollebenen-Datenbits anzeigt.

5. Verfahren zum Kombinieren eines digitalen Videosignals mit einem Kontrollebenensignal, wobei das Verfahren die Schritte Emfang eines digitalen Videosignals und ebenso Empfang eines entsprechenden Kontrollebenensignals beinhaltet, **dadurch gekennzeichnet,** daß das Videosignal drei Datenworte für jedes Pixel hat, und das Kontrollebenen-Signal mindestens drei Datenbits für jedes Pixel hat und zumindest das am wenigsten bedeutende Bit jedes Datenwortes verworfen wird und jedes verworfene Bit durch ein entsprechendes der Kontrollebenen-Bits für dieses Pixel ersetzt wird.

6. Verfahren nach Anspruch 5, **dadurch gekennzeichnet,** daß das Videosignal ein YUV-Signal im 4:2:2-Format beinhaltet.

7. System zum Kombinieren eines digitalen Videosignals mit einem Kontrollebenensignal, umfassend eine Vorrichtung zum Empfang eines digitalen Videosignals und eine Vorrichtung zum Empfang eines Kontrollebenensignals, **dadurch gekennzeichnet,** daß das Videosignal drei Datenworte für jedes Pixel hat und das Kontrollebenen-Signal mindestens drei Datenbits für jedes Pixel hat, und weiter gekennzeichnet durch eine Vorrichtung zum Verwerfen oder Streichen mindestens des am wenigsten bedeutenden Bits von jedem Datenwort für ein Pixel und zu seinem Ersatz durch ein entsprechendes der Kontrollebenen-Bits für dieses Pixel.

8. System nach Anspruch 7, **dadurch gekennzeichnet**, daß das Videosignal ein YUV-Signal im 4:2:2-Format beinhaltet.

9. Digitales Videobild-Zusammensetzungssystem umfassend eine Vorrichtung zum Empfang eines ersten digitalen Videosignals, eine Vorrichtung zum Empfang eines zweiten digitalen Videosignals, eine Vorrichtung zum Kombinieren des ersten und des zweiten Videosignals für jedes Pixel in variablen Proportionen abhängig von dem Wert eines dem Pixel entsprechenden Kontrollebenensignals, **dadurch gekennzeichnet,** daß das erste Videosignal drei Datenworte pro Pixel beinhaltet und mindestens eines der Datenbits von jedem Datenwort Kontrollebenen-Daten aufweist, und weiter gekennzeichnet durch eine Vorrichtung zum Trennen der Kontrollebenen-Datenbits für jedes Pixel von dem ersten Videosignal.

10. System nach Anspruch 9, **dadurch gekennzeichnet,** daß das am wenigsten bedeutende Bit jedes Datenwortes in dem ersten Videosignal ein Kontrollebenen-Datenbit aufweist.

11. System nach Anspruch 9, **dadurch gekennzeichnet,** daß das erste Videosignal ein im 4:2:2-Format empfangenes YUV-Signal aufweist.

## Revendications

1. Procédé de combinaison d'un signal vidéo numérique et d'un signal de plan de commande, le procédé comprenant les étapes consistant à recevoir un signal vidéo numérique et recevoir un signal de plan de commande correspondant, caractérisé en ce que le signal vidéo comporte trois mots de données pour chaque pixel et le signal de plan de commande comporte trois bits de données pour chaque pixel, et en ce qu'il comporte les étapes consistant à associer chacun des trois mots de données à un bit de données du plan de commande respectif, et à remplacer un mot de données dans le signal vidéo avec une combinaison prédéterminée des bits lorsque son bit de données de plan de commande respectif a un premier niveau logique et à laisser le mot de données inchangé lorsque son bit de données de plan de commande respectif a un deuxième niveau logique.

2. Système de combinaison d'un signal vidéo numérique et d'un signal de plan de commande comprenant des moyens pour recevoir un signal vidéo numérique et des moyens (22) pour recevoir un signal de plan de commande, caractérisé en ce que le signal vidéo comporte trois mots de données pour chaque pixel et le signal de plan de commande comporte trois bits de données pour chaque pixel et en ce qu'il comporte des moyens pour associer chacun des trois mots de données avec un bit de données de plan de commande respectif, et des moyens (20) pour remplacer un mot de donnée dans le signal vidéo par une combinaison prédéterminée de bits lorsque son bit de données de plan de commande respectif a un premier niveau logique et à laisser le mot de données inchangé lorsque son bit de données de plan de commande respectif a un deuxième niveau logique.

3. Système de composition d'images vidéo numériques comprenant des moyens (1) pour recevoir un premier signal vidéo numérique comprenant une pluralité de mots de données pour chaque pixel, des moyens pour recevoir un deuxième signal vidéo numérique, et des moyens pour combiner les premier et deuxième signaux vidéo numériques pour chaque pixel selon des proportions variables en fonction de la valeur d'un bit ou de bits de données de plan de commande correspondant à ce pixel, caractérisé en ce qu'au moins une combinaison de bits dans un mot de données pour un pixel dans le premier signal vidéo indique la présence d'un bit de données de plan de commande, en ce qu'il comporte des moyens (6) pour engendrer un bit de données de plan de commande pour ce pixel en réponse à ladite combinaison de bits dans le mot de données, et en ce qu'il comporte des moyens (8) pour effectuer une interpolation d'un mot de données d'un signal vidéo de remplacement pour ce pixel à partir de mots de données correspondants dans les pixels adjacents pour être utilisés dans les moyens de combinaison.

4. Système de composition d'images vidéo numériques selon la revendication 3, dans lequel le premier signal vidéo comporte trois mots de données par pixel comprenant chacun au moins une combinaison de bits indiquant la présence d'un bit de données de plan de commande.

5. Procédé de combinaison d'un signal vidéo numérique et d'un signal de plan de commande, le procédé comprenant les étapes consistant à recevoir un signal vidéo numérique et à recevoir également un signal de plan de commande correspondant, caractérisé en ce que le signal vidéo comporte trois mots de données pour chaque pixel, et le signal de plan de commande comporte au moins trois bits de données pour chaque pixel et en ce qu'il comporte les étapes consistant à supprimer au moins le bit le moins significatif de chaque mot de données et remplacer chaque bit supprimé par un bit respectif des bits de plan de commande pour chaque pixel.

6. Procédé de combinaison d'un signal vidéo numérique et d'un signal de plan de commande selon la revendication 5, caractérisé en ce que le signal vidéo comporte un signal YUV dans le format 4:2:2.

7. Système pour combiner un signal vidéo numérique et un signal de plan de commande, comprenant des moyens pour recevoir un signal vidéo numérique et des moyens pour recevoir un signal de plan de commande, caractérisé en ce que le signal vidéo comporte trois mots de données pour chaque pixel et le signal de plan de commande comporte au moins trois bits de données pour chaque pixel, et en ce qu'il comporte des moyens pour supprimer au moins le bit le moins significatif de chacun des mots de données pour chaque pixel et pour le remplacer avec un bit respectif des bits de plan de commande pour ce pixel.

8. Système pour combiner un signal vidéo numérique et un signal de plan de commande selon la revendication 7, caractérisé en ce que le signal vidéo comporte un signal YUV selon le format 4:2:2.

9. Système de composition d'images vidéo numériques comprenant des moyens pour recevoir un premier signal vidéo numérique, des moyens pour recevoir un deuxième signal vidéo numérique, des moyens pour combiner les premier et deuxième signaux vidéo pour chaque pixel selon des proportions variable en fonction de la valeur d'un signal de plan de commande correspondant pour ce pixel, caractérisé en ce que le premier signal vidéo comporte trois mots de données par pixel et au moins un des bits de données pour chaque mots de données comporte des données de plan de commande, et en ce qu'il comporte des moyens pour séparer les bits de données de plan de commande pour chaque pixel du premier signal vidéo.

10. Système de composition d'images vidéo numériques selon la revendication 9, caractérisé en ce que le bit le moins significatif de chaque mot de données dans le premier signal vidéo comporte un bit de données de plan de commande.

11. Système de composition d'images vidéo numériques selon la revendication 9, caractérisé en ce que le premier signal vidéo comporte un signal YUV reçu selon le format 4:2:2.
